(19) Europäisches Patentamt
European Patent Office
Office européen des brevets

(11) Publication number: **0 603 845 B1**

# (12) EUROPEAN PATENT SPECIFICATION

(45) Date of publication of patent specification: **02.11.95**

(51) Int. Cl.6: **A01N 43/653**, //(A01N43/653, 43:653,47:38,55:00,37:32,47:20, 47:34,47:18,43:52,43:78,47:20)

(21) Application number: **93120661.9**

(22) Date of filing: **22.12.93**

## (54) Fungicide composition for agriculture and horticulture.

(30) Priority: **25.12.92 JP 358928/92**

(43) Date of publication of application:
**29.06.94 Bulletin 94/26**

(45) Publication of the grant of the patent:
**02.11.95 Bulletin 95/44**

(84) Designated Contracting States:
**DE FR GB**

(56) References cited:
**EP-A- 0 182 740**
**EP-A- 0 427 695**
**EP-A- 0 522 558**

(73) Proprietor: **KUREHA CHEMICAL INDUSTRY CO., LTD.**
**9-11, Horidome-cho, 1-chome**
**Nihonbashi**
**Chuo-ku**
**Tokyo 103 (JP)**

(72) Inventor: **Tateishi, Hideaki**
**Meijidanchi 30-9**
**Iwaki-shi,**
**Fukushima-ken (JP)**
Inventor: **Watanabe, Takeo**
**78-31, Hananoi,**
**Nishiki-machi**
**Iwaki-shi,**
**Fukushima-ken (JP)**
Inventor: **Saishoji, Toshihide**
**154-1, Harada, Nishiki-machi**
**Iwaki-shi,**
**Fukushima-ken (JP)**

(74) Representative: **Boeters, Hans Dietrich, Dr. et al**
**Patentanwälte Boeters & Bauer,**
**Bereiteranger 15**
**D-81541 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

### BACKGROUND OF THE INVENTION

### Field of the Invention

The present invention relates to a fungicide composition for agriculture and horticulture, and, more particularly, to a fungicide composition for agriculture and horticulture comprising at least one derivative of 1,5-diphenyl-1H-1,2,4-triazole-3-carboxamide and at least one fungicide compound selected from the group consisting of ergosterol biosynthesis-inhibitive type fungicide compounds, carboximide fungicide compounds, benzimidazole fungicide compounds and carbamate fungicide compounds, as effective components.

### Description of Background Art

Effectiveness of derivatives of 1,5-diphenyl-1H-1,2,4-triazole-3-carboxamide as a herbicidal agent is known by EP-A-282 303, EP-A-282 669 and EP-A-220 956. EP-A-0 552 558 describes that a derivative of 1,5-diphenyl-1H-1,2,4-triazole-3-carboxamide can be used as an effective component of fungicidal agents.

Among various diseases of plants, those induced by external causes and very difficult to prevent, such as gray mold disease, require a great amount of drugs for the prevention. The use of a great amount of drugs tends to produce drug-resistant fungi. Impaired effects of drugs due to the drug-resistant fungi are a worldwide problem.

Development of a fungicidal composition for agriculture and horticulture use which surely exhibits a certain effect at a small amount has been desired.

The object of the present invention is therefore to provide a fungicidal composition for agriculture and horticulture use which surely exhibits a certain effect at a small amount.

As a result of extensive studied, the present inventors found that the use of at least one derivative of 1,5-diphenyl-1H-1,2,4-triazole-3-carboxamide represented by the following formula (I) in combination with at least one fungicidal compound selected from the group consisting of ergosterol biosynthesis-inhibitive type fungicidal compounds, carboximide fungicidal compounds, benzimidazole fungicidal compounds and carbamate fungicidal compounds exhibits a superior synergistic effect. This finding has led to the completion of the present invention.

### SUMMARY OF THE INVENTION

The above object is solved according to the present invention by a fungicidal composition for agriculture and horticulture use, which comprises as effective components,

at least one derivative of 1,5-diphenyl-1H-1,2,4-triazole-3-carboxamide represented by the following formula (I),

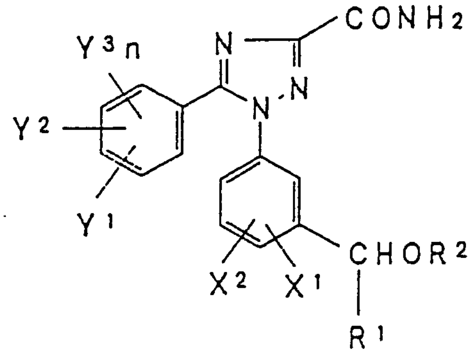

(I )

wherein $R^1$ is a $C_1$-$C_6$ alkyl group, a $C_3$-$C_6$ cycloalkyl group, a $C_1$-$C_5$ fluoroalkyl group, a ($C_1$-$C_4$ alkoxy)-methyl group or a phenyl group, $R^2$ is a $C_1$-$C_8$ alkyl group, a ($C_3$-$C_6$ cycloalkyl)methyl group, a $C_2$-$C_5$ fluoroalkyl group, a ($C_1$-$C_4$ alkoxy)($C_1$-$C_4$ alkyl) group, a phenyl group, a phenylmethyl group or a phenylmethyl group substituted by a $C_1$-$C_4$ alkyl group or a halogen atom, $X^1$ represents a hydrogen atom,

a $C_1$-$C_4$ alkyl group, a $C_1$-$C_4$ alkoxy group or a halogen atom, $X^2$ represents a hydrogen atom, a $C_1$-$C_4$ alkyl group or a halogen atom, $Y^1$ is a hydrogen atom, a halogen atom, a $C_1$-$C_4$ alkyl group, a $C_1$-$C_4$ alkoxy group, a $C_1$-$C_4$ fluoroalkoxy group, a HO group, a HOOC group or a ($C_1$-$C_4$ alkoxy)carbonyl group, $Y^2$ is a hydrogen atom, a $C_1$-$C_4$ alkyl group or a halogen atom, $Y^3$ is a hydrogen atom or a halogen atom, and n denotes 1 or 2, and

at least one fungicidal compound selected from the group consisting of ergosterol biosynthesis-inhibitive type fungicidal compounds, carboximide fungicidal compounds, benzimidazole fungicidal compounds and carbamate fungicidal compounds.

Other objects, features and advantages of the invention will hereinafter become more readily apparent from the following description.

## DETAILED DESCRIPTION OF THE INVENTION AND PREFERRED EMBODIMENTS

Carboxamide derivatives represented by the above formula (I) used in the present invention are compounds described in EP-A-0 552 558.

In the descriptions below the derivatives of 1,5-diphenyl-1H-1,2,4-triazole-3-carboxamide of formula (I) are collectively referred to as "group A compounds", and the ergosterol biosynthesis-inhibitive type fungicidal compounds, carboximide fungicidal compounds, benzimidazole fungicidal compounds and carbamate fungicidal compounds which are used in combination with group A compounds are collectively referred to as "group B compounds".

Given as specific examples of group A compounds are compounds listed in Table 1. Physicochemical characteristics of these compounds are given in Table 2.

TABLE 1

| Compound No. | Substituents $R^1$ / $R^2$ | $X^1$ / $X^2$ | $Y^1$ / $Y^2$ / $Y^3{}_n$ |
|---|---|---|---|
| A-1 | cyclopropyl<br>$n-C_4H_9$ | H<br>H | H<br>H<br>H |
| A-2 | cyclopentyl<br>$n-C_4H_9$ | H<br>H | H<br>H<br>H |
| A-3 | $t-C_4H_9$<br>$n-C_4H_9$ | H<br>H | 2-F<br>H<br>H |
| A-4 | $t-C_4H_9$<br>$n-C_4H_9$ | H<br>H | H<br>H<br>H |
| A-5 | $t-C_4H_9$<br>$PhCH_2$ | H<br>H | H<br>H<br>H |
| A-6 | $n-C_3F_7$<br>$n-C_4H_9$ | $6-CH_3$<br>H | H<br>H<br>H |
| A-7 | $C_2F_5$<br>$n-C_4H_9$ | H<br>H | H<br>H<br>H |
| A-8 | $CF_3$<br>$n-C_4H_9$ | H<br>H | H<br>H<br>H |
| A-9 | $n-C_4H_9$<br>$n-C_4H_9$ | H<br>H | H<br>H<br>H |
| A-10 | $n-C_3H_7$<br>$n-C_4H_9$ | H<br>H | H<br>H<br>H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-11 | $C_2H_5$<br>$n$-$C_4H_9$ | 6-$CH_3$<br>H | 2-F<br>3-F<br>H |
| A-12 | $C_2H_5$<br>$n$-$C_4H_9$ | 6-$CH_3$<br>H | 2-F<br>H<br>H |
| A-13 | $C_2H_5$<br>$n$-$C_4H_9$ | 6-$CH_3$<br>H | 2-F<br>5-F<br>H |
| A-14 | $C_2H_5$<br>$n$-$C_4H_9$ | H<br>H | H<br>H<br>H |
| A-15 | $C_2H_5$<br>$n$-$C_4H_9$ | 6-$CH_3$<br>H | H<br>H<br>H |
| A-16 | $C_2H_5$<br>$n$-$C_3H_7$ | H<br>H | H<br>H<br>H |
| A-17 | $C_2H_5$<br>$i$-$C_4H_9$ | H<br>H | H<br>H<br>H |
| A-18 | $i$-$C_4H_9$<br>$n$-$C_4H_9$ | H<br>H | H<br>H<br>H |
| A-19 | $CH_3OCH_2$<br>$n$-$C_4H_9$ | 6-$CH_3$<br>H | H<br>H<br>H |
| A-20 | $CH_3$<br>$(n$-$C_3F_7)CH_2$ | H<br>H | H<br>H<br>H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-21 | $CH_3$<br>$n-C_6H_{13}$ | H<br>H | H<br>H<br>H |
| A-22 | $CH_3$<br>$n-C_5H_{11}$ | H<br>H | H<br>H<br>H |
| A-23 | $CH_3$<br>$n-C_4H_9$ | H<br>H | 2-F<br>H<br>H |
| A-24 | $CH_3$<br>$n-C_4H_9$ | 6-Cl<br>H | 3-F<br>5-F<br>H |
| A-25 | $CH_3$<br>$n-C_4H_9$ | 6-Cl<br>H | 2-F<br>H<br>H |
| A-26 | $CH_3$<br>$n-C_4H_9$ | 6-Cl<br>H | 2-F<br>3-F<br>5, $6-F_2$ |
| A-27 | $CH_3$<br>$n-C_4H_9$ | 6-Cl<br>H | 2-F<br>3-F<br>H |
| A-28 | $CH_3$<br>$n-C_4H_9$ | 6-Cl<br>H | 2-F<br>5-F<br>H |
| A-29 | $CH_3$<br>$n-C_4H_9$ | 6-Cl<br>H | H<br>H<br>H |
| A-30 | $CH_3$<br>$n-C_4H_9$ | $4-C_2H_5O$<br>H | H<br>H<br>H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-31 | $CH_3$<br>$n\text{-}C_4H_9$ | $4\text{-}CH_3$<br>H | H<br>H<br>H |
| A-32 | $CH_3$<br>$n\text{-}C_4H_9$ | 4-Cl<br>H | H<br>H<br>H |
| A-33 | $CH_3$<br>$n\text{-}C_4H_9$ | $6\text{-}CH_3O$<br>H | H<br>H<br>H |
| A-34 | $CH_3$<br>$n\text{-}C_4H_9$ | 6-Cl<br>H | H<br>H<br>H |
| A-35 | $CH_3$<br>$n\text{-}C_4H_9$ | $6\text{-}CH_3$<br>H | H<br>H<br>H |
| A-36 | $CH_3$<br>$n\text{-}C_4H_9$ | H<br>H | H<br>H<br>H |
| A-37 | $CH_3$<br>$n\text{-}C_3H_7$ | H<br>H | H<br>H<br>H |
| A-38 | $CH_3$<br>$i\text{-}C_5H_{11}$ | H<br>H | H<br>H<br>H |
| A-39 | $CH_3$<br>$CH_3$ | 4-Cl<br>H | H<br>H<br>H |
| A-40 | $CH_3$<br>$CH_3$ | H<br>H | H<br>H<br>H |

TABLE 1 (Continued)

| Compound No. | Substituents $R^1$ / $R^2$ | $X^1$ / $X^2$ | $Y^1$ / $Y^2$ / $Y^3_n$ |
|---|---|---|---|
| A-41 | $s-C_4H_9$ | H | H |
| | | | H |
| | $n-C_4H_9$ | H | H |
| A-42 | $i-C_3H_7$ | H | H |
| | | | H |
| | (cyclohexyl)$CH_2$ | H | H |
| A-43 | $i-C_3H_7$ | H | 2-F |
| | | | H |
| | $n-C_5H_{11}$ | H | H |
| A-44 | $i-C_3H_7$ | H | H |
| | | | H |
| | $n-C_5H_{11}$ | H | H |
| A-45 | $i-C_3H_7$ | H | $2-CH_3$ |
| | | | H |
| | $n-C_4H_9$ | H | H |
| A-46 | $i-C_3H_7$ | H | $3-CH_3$ |
| | | | H |
| | $n-C_4H_9$ | H | H |
| A-47 | $i-C_3H_7$ | H | $4-CH_3$ |
| | | | H |
| | $n-C_4H_9$ | H | H |
| A-48 | $i-C_3H_7$ | $6-CH_3$ | $2-COOCH_3$ |
| | | | H |
| | $n-C_4H_9$ | H | H |
| A-49 | $i-C_3H_7$ | $6-CH_3$ | 2-COOH |
| | | | H |
| | $n-C_4H_9$ | H | H |
| A-50 | $i-C_3H_7$ | H | 2-Cl |
| | | | H |
| | $n-C_4H_9$ | H | H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-51 | i-$C_3H_7$<br>n-$C_4H_9$ | H<br>H | 2-Cl<br>6-F<br>H |
| A-52 | i-$C_3H_7$<br>n-$C_4H_9$ | H<br>H | 4-Cl<br>H<br>H |
| A-53 | i-$C_3H_7$<br>n-$C_4H_9$ | 6-$CH_3$<br>H | 2-F<br>H<br>H |
| A-54 | i-$C_3H_7$<br>n-$C_4H_9$ | 6-$CH_3$<br>H | 2-F<br>3-F<br>H |
| A-55 | i-$C_3H_7$<br>n-$C_4H_9$ | H<br>H | 2-F<br>4-F<br>H |
| A-56 | i-$C_3H_7$<br>n-$C_4H_9$ | H<br>H | 2-F<br>6-F<br>H |
| A-57 | i-$C_3H_7$<br>n-$C_4H_9$ | H<br>H | 2-F<br>3-F<br>H |
| A-58 | i-$C_3H_7$<br>n-$C_4H_9$ | H<br>H | 2-F<br>H<br>H |
| A-59 | i-$C_3H_7$<br>n-$C_4H_9$ | 6-$CH_3$<br>H | 2-F<br>5-F<br>H |
| A-60 | i-$C_3H_7$<br>n-$C_4H_9$ | H<br>H | 2-F<br>5-F<br>H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-61 | i-$C_3H_7$<br>n-$C_4H_9$ | H<br>H | 3-F<br>H<br>H |
| A-62 | i-$C_3H_7$<br>n-$C_4H_9$ | H<br>H | 3-F<br>4-F<br>H |
| A-63 | i-$C_3H_7$<br>n-$C_4H_9$ | 6-$CH_3$<br>H | 3-F<br>5-F<br>H |
| A-64 | i-$C_3H_7$<br>n-$C_4H_9$ | H<br>H | 4-F<br>H<br>H |
| A-65 | i-$C_3H_7$<br>n-$C_4H_9$ | H<br>H | H<br>H<br>H |
| A-66 | i-$C_3H_7$<br>n-$C_4H_9$ | 6-$C_2H_5$<br>H | H<br>H<br>H |
| A-67 | i-$C_3H_7$<br>n-$C_4H_9$ | 6-$CH_3$<br>H | H<br>H<br>H |
| A-68 | i-$C_3H_7$<br>n-$C_4H_9$ | 6-i-$C_3H_7$<br>H | H<br>H<br>H |
| A-69 | i-$C_3H_7$<br>n-$C_4H_9$ | 6-Cl<br>H | H<br>H<br>H |
| A-70 | i-$C_3H_7$<br>n-$C_4H_9$ | H<br>H | 2-$CF_3O$<br>H<br>H |

TABLE 1 (Continued)

| Compound No. | Substituents $R^1$ / $R^2$ | $X^1$ / $X^2$ | $Y^1$ / $Y^2$ / $Y^3_n$ |
|---|---|---|---|
| A-71 | i-$C_3H_7$<br>n-$C_4H_9$ | H<br>H | 2-$C_2H_5O$<br>H<br>H |
| A-72 | i-$C_3H_7$<br>n-$C_4H_9$ | H<br>H | 2-$CH_3O$<br>H<br>H |
| A-73 | i-$C_3H_7$<br>n-$C_4H_9$ | H<br>H | 3-$CH_3O$<br>H<br>H |
| A-74 | i-$C_3H_7$<br>n-$C_4H_9$ | H<br>H | 4-$CH_3O$<br>H<br>H |
| A-75 | i-$C_3H_7$<br>n-$C_3H_7$ | H<br>H | H<br>H<br>H |
| A-76 | i-$C_3H_7$<br>i-$C_5H_{11}$ | H<br>H | H<br>H<br>H |
| A-77 | i-$C_3H_7$<br>$C_2H_5OC_2H_4$ | H<br>H | H<br>H<br>H |
| A-78 | i-$C_3H_7$<br>$C_2H_5$ | H<br>H | H<br>H<br>H |
| A-79 | i-$C_3H_7$<br>$PhCH_2$ | H<br>H | 2-F<br>H<br>H |
| A-80 | i-$C_3H_7$<br>$PhCH_2$ | H<br>H | 2-F<br>3-F<br>H |

TABLE 1 (Continued)

| Compound No. | Substituents $R^1$ / $R^2$ | $X^1$ / $X^2$ | $Y^1$ / $Y^2$ / $Y^3{}_n$ |
|---|---|---|---|
| A-81 | $i-C_3H_7$<br>$PhCH_2$ | H<br>H | 2-F<br>5-F<br>H |
| A-82 | $i-C_3H_7$<br>$PhCH_2$ | H<br>H | H<br>H<br>H |
| A-83 | $i-C_3H_7$<br>$PhCH_2$ | H<br>H | 2-HO<br>H<br>H |
| A-84 | $i-C_3H_7$<br>$(2-CH_3-Ph)CH_2$ | H<br>H | H<br>H<br>H |
| A-85 | $i-C_3H_7$<br>$(4-Cl-Ph)CH_2$ | H<br>H | H<br>H<br>H |
| A-86 | $i-C_3H_7$<br>Ph | H<br>H | H<br>H<br>H |
| A-87 | Ph<br>$n-C_4H_9$ | H<br>H | H<br>H<br>H |

TABLE 2

| Compound No. | Physicochemical Characteristics |
|---|---|
| A-1 | Appearance: Light yellow liquid<br>:<br>IR ($cm^{-1}$) : 3450, 3290, 1690 |
| A-2 | Appearance: Colorless crystal<br>m.p. (°C) : 101-103<br>IR ($cm^{-1}$) : 3420, 3300, 1680 |
| A-3 | Appearance: Light yellow crystal<br>m.p. (°C) : 75-77<br>IR ($cm^{-1}$) : 3410, 3310, 1670 |
| A-4 | Appearance: Light yellow crystal<br>m.p. (°C) : 96-98<br>IR ($cm^{-1}$) : 3450, 3300, 1680 |
| A-5 | Appearance: Colorless crystal<br>m.p. (°C) : 146-148<br>IR ($cm^{-1}$) : 3450, 3290, 1680 |
| A-6 | Appearance: Light brown liquid<br>:<br>IR ($cm^{-1}$) : 3440, 3300, 1675 |
| A-7 | Appearance: Colorless crystal<br>m.p. (°C) : 132-134<br>IR ($cm^{-1}$) : 3450, 3370, 1665 |
| A-8 | Appearance: Yellow crystal<br>m.p. (°C) : 72-74<br>IR ($cm^{-1}$) : 3440, 3320, 1680 |
| A-9 | Appearance: Colorless crystal<br>m.p. (°C) : 87-89<br>IR ($cm^{-1}$) : 3400, 3290, 1670 |
| A-10 | Appearance: Light brown crystal<br>m.p. (°C) : 80-82<br>IR ($cm^{-1}$) : 3450, 3280, 1680 |
| A-11 | Appearance: Light brown liquid<br>:<br>IR ($cm^{-1}$) : 3450, 3170, 1680 |

TABLE 2 (Continued)

| Compound No. | Physicochemical Characteristics |
|---|---|
| A-12 | Appearance: Colorless crystal<br>m.p. (°C) : 103-105<br>IR ($cm^{-1}$) : 3440, 3160, 1680 |
| A-13 | Appearance: Light brown liquid<br>:<br>IR ($cm^{-1}$) : 3450, 3160, 1680 |
| A-14 | Appearance: Light brown crystal<br>m.p. (°C) : 68-70<br>IR ($cm^{-1}$) : 3450, 3300, 1690 |
| A-15 | Appearance: Light brown crystal<br>m.p. (°C) : 140-141<br>IR ($cm^{-1}$) : 3450, 3130, 1690 |
| A-16 | Appearance: Light brown liquid<br>:<br>IR ($cm^{-1}$) : 3450, 3260, 1680 |
| A-17 | Appearance: Light yellow liquid<br>:<br>IR ($cm^{-1}$) : 3450, 3290, 1690 |
| A-18 | Appearance: Light red brown crystal<br>m.p. (°C) : 108-110<br>IR ($cm^{-1}$) : 3440, 3375, 1670 |
| A-19 | Appearance: Light brown liquid<br>:<br>IR ($cm^{-1}$) : 3450, 3290, 1675 |
| A-20 | Appearance: Light brown liquid<br>:<br>IR ($cm^{-1}$) : 3440, 3360, 1670 |
| A-21 | Appearance: Light brown liquid<br>:<br>IR ($cm^{-1}$) : 3450, 3310, 1690 |
| A-22 | Appearance: Colorless crystal<br>m.p. (°C) : 50-52<br>IR ($cm^{-1}$) : 3450, 3290, 1690 |

TABLE 2 (Continued)

| Compound No. | Physicochemical Characteristics |
|---|---|
| A-23 | Appearance: Light yellow liquid<br>:<br>IR ($cm^{-1}$) : 3450, 3300, 1690 |
| A-24 | Appearance: Light yellow crystal<br>m.p. (°C) : 108-110<br>IR ($cm^{-1}$) : 3470, 3300, 1670 |
| A-25 | Appearance: Light brown liquid<br>:<br>IR ($cm^{-1}$) : 3450, 3160, 1680 |
| A-26 | Appearance: Colorless crystal<br>m.p. (°C) : 130-132<br>IR ($cm^{-1}$) : 3450, 3175, 1685 |
| A-27 | Appearance: Light brown liquid<br>:<br>IR ($cm^{-1}$) : 3450, 3160, 1680 |
| A-28 | Appearance: Light brown liquid<br>:<br>IR ($cm^{-1}$) : 3450, 3170, 1685 |
| A-29 | Appearance: Light brown crystal<br>m.p. (°C) : 66-68<br>IR ($cm^{-1}$) : 3430, 3300, 1670 |
| A-30 | Appearance: Light brown crystal<br>m.p. (°C) : 180-182<br>IR ($cm^{-1}$) : 3420, 3300, 1690, 1665 |
| A-31 | Appearance: Colorless crystal<br>m.p. (°C) : 129-131<br>IR ($cm^{-1}$) : 3460, 3230, 1700, 1670 |
| A-32 | Appearance: Light brown crystal<br>m.p. (°C) : 129-131<br>IR ($cm^{-1}$) : 3450, 3300, 1675 |
| A-33 | Appearance: Light brown crystal<br>m.p. (°C) : 168-170<br>IR ($cm^{-1}$) : 3480, 3300, 1710, 1670 |

TABLE 2 (Continued)

| Compound No. | Physicochemical Characteristics |
|---|---|
| A-34 | Appearance: Colorless crystal<br>m.p. (°C) : 130-132<br>IR ($cm^{-1}$) : 3450, 3130, 1690 |
| A-35 | Appearance: Light brown crystal<br>m.p. (°C) : 155-157<br>IR ($cm^{-1}$) : 3450, 3125, 1690 |
| A-36 | Appearance: Colorless crystal<br>m.p. (°C) : 92-94<br>IR ($cm^{-1}$) : 3470, 3240, 1715, 1675 |
| A-37 | Appearance: Colorless crystal<br>m.p. (°C) : 86-88<br>IR ($cm^{-1}$) : 3450, 3290, 1675 |
| A-38 | Appearance: Colorless crystal<br>m.p. (°C) : 96-98<br>IR ($cm^{-1}$) : 3470, 3270, 1710, 1670 |
| A-39 | Appearance: Light brown crystal<br>m.p. (°C) : 117-119<br>IR ($cm^{-1}$) : 3380, 3230, 1680 |
| A-40 | Appearance: Colorless crystal<br>m.p. (°C) : 174-176<br>IR ($cm^{-1}$) : 3450, 3240, 1710, 1675 |
| A-41 | Appearance: Colorless crystal<br>m.p. (°C) : 74-76<br>IR ($cm^{-1}$) : 3450, 3300, 1675 |
| A-42 | Appearance: Colorless crystal<br>m.p. (°C) : 147-149<br>IR ($cm^{-1}$) : 3475, 3310, 1715, 1670 |
| A-43 | Appearance: Light yellow liquid<br>:<br>IR ($cm^{-1}$) : 3460, 3300, 1675 |
| A-44 | Appearance: Light yellow crystal<br>m.p. (°C) : 81-83<br>IR ($cm^{-1}$) : 3400, 3300, 1675 |

TABLE 2 (Continued)

| Compound No. | Physicochemical Characteristics |
|---|---|
| A-45 | Appearance: Light brown liquid<br>:<br>IR ($cm^{-1}$) : 3460, 3275, 1680 |
| A-46 | Appearance: Light brown liquid<br>:<br>IR ($cm^{-1}$) : 3460, 3300, 1680 |
| A-47 | Appearance: Light brown liquid<br>:<br>IR ($cm^{-1}$) : 3400, 3300, 1680 |
| A-48 | Appearance: Colorless liquid<br>:<br>IR ($cm^{-1}$) : 3450, 3300, 1730, 1670 |
| A-49 | Appearance: Light brown crystal<br>m.p. (°C) : 132-134<br>IR ($cm^{-1}$) : 3450, 3290, 1700, 1675 |
| A-50 | Appearance: Light brown crystal<br>m.p. (°C) : 73-75<br>IR ($cm^{-1}$) : 3400, 3310, 1680, 1665 |
| A-51 | Appearance: Light brown liquid<br>:<br>IR ($cm^{-1}$) : 3450, 3170, 1680 |
| A-52 | Appearance: Brown liquid<br>:<br>IR ($cm^{-1}$) : 3450, 3270, 1690 |
| A-53 | Appearance: Light brown liquid<br>:<br>IR ($cm^{-1}$) : 3450, 3200, 1680 |
| A-54 | Appearance: Colorless crystal<br>m.p. (°C) : 97-98<br>IR ($cm^{-1}$) : 3360, 3250, 1670 |
| A-55 | Appearance: Light brown crystal<br>m.p. (°C) : 120-122<br>IR ($cm^{-1}$) : 3450, 3300, 1675 |

TABLE 2 (Continued)

| Compound No. | Physicochemical Characteristics |
|---|---|
| A-56 | Appearance: Light brown liquid<br>:<br>IR ($cm^{-1}$) : 3450, 3300, 1690 |
| A-57 | Appearance: Light brown liquid<br>:<br>IR ($cm^{-1}$) : 3450, 3280, 1680 |
| A-58 | Appearance: Colorless crystal<br>m.p. (°C) : 79-81<br>IR ($cm^{-1}$) : 3450, 3300, 1700 |
| A-59 | Appearance: Brown liquid<br>:<br>IR ($cm^{-1}$) : 3450, 3170, 1685 |
| A-60 | Appearance: Colorless crystal<br>m.p. (°C) : 139-141<br>IR ($cm^{-1}$) : 3470, 3210, 1705, 1670 |
| A-61 | Appearance: Colorless crystal<br>m.p. (°C) : 106-108<br>IR ($cm^{-1}$) : 3475, 3230, 1710, 1665 |
| A-62 | Appearance: Light brown liquid<br>:<br>IR ($cm^{-1}$) : 3450, 3170, 1670 |
| A-63 | Appearance: Brown liquid<br>:<br>IR ($cm^{-1}$) : 3450, 3170, 1685 |
| A-64 | Appearance: Light yellow crystal<br>m.p. (°C) : 53-55<br>IR ($cm^{-1}$) : 3440, 3225, 1670 |
| A-65 | Appearance: Light brown crystal<br>m.p. (°C) : 87-89<br>IR ($cm^{-1}$) : 3430, 3290, 1680 |
| A-66 | Appearance: Light yellow liquid<br>:<br>IR ($cm^{-1}$) : 3440, 3300, 1680 |

TABLE 2 (Continued)

| Compound No. | Physicochemical Characteristics |
|---|---|
| A-67 | Appearance: Colorless crystal<br>m.p. (°C) : 134-135<br>IR ($cm^{-1}$) : 3400, 3230, 1670 |
| A-68 | Appearance: Light yellow liquid<br>:<br>IR ($cm^{-1}$) : 3450, 3300, 1675 |
| A-69 | Appearance: Light brown crystal<br>m.p. (°C) : 66-68<br>IR ($cm^{-1}$) : 3445, 3160, 1690 |
| A-70 | Appearance: Light yellow crystal<br>m.p. (°C) : 106-108<br>IR ($cm^{-1}$) : 3450, 3295, 1680 |
| A-71 | Appearance: Colorless crystal<br>m.p. (°C) : 113-115<br>IR ($cm^{-1}$) : 3350, 3170, 1695, 1665 |
| A-72 | Appearance: Light brown liquid<br>m.p. (°C) : 94-96<br>IR ($cm^{-1}$) : 3375, 3300, 1680 |
| A-73 | Appearance: Colorless crystal<br>m.p. (°C) : 117-119<br>IR ($cm^{-1}$) : 3440, 3180, 1680 |
| A-74 | Appearance: Yellow liquid<br>:<br>IR ($cm^{-1}$) : 3450, 3290, 1685 |
| A-75 | Appearance: Light brown liquid<br>:<br>IR ($cm^{-1}$) : 3450, 3300, 1670 |
| A-76 | Appearance: Colorless crystal<br>m.p. (°C) : 102-104<br>IR ($cm^{-1}$) : 3400, 3290, 1670 |
| A-77 | Appearance: Brown liquid<br>:<br>IR ($cm^{-1}$) : 3440, 3310, 1670 |

TABLE 2 (Continued)

| Compound No. | Physicochemical Characteristics |
|---|---|
| A-78 | Appearance: Light brown crystal<br>m.p. (°C) : 79-81<br>IR ($cm^{-1}$) : 3450, 3295, 1675 |
| A-79 | Appearance: Light yellow crystal<br>m.p. (°C) : 128-130<br>IR ($cm^{-1}$) : 3475, 3325, 1670 |
| A-80 | Appearance: Light yellow liquid<br>:<br>IR ($cm^{-1}$) : 3450, 3250, 1680 |
| A-81 | Appearance: Light yellow liquid<br>:<br>IR ($cm^{-1}$) : 3460, 3270, 1680 |
| A-82 | Appearance: Light brown liquid<br>:<br>IR ($cm^{-1}$) : 3450, 3270, 1685 |
| A-83 | Appearance: Gray crystal<br>m.p. (°C) : 178-180<br>IR ($cm^{-1}$) : 3430, 3140, 1650 |
| A-84 | Appearance: Light brown crystal<br>m.p. (°C) : 114-116<br>IR ($cm^{-1}$) : 3470, 3300, 1670 |
| A-85 | Appearance: Light brown liquid<br>:<br>IR ($cm^{-1}$) : 3450, 3270, 1680 |
| A-86 | Appearance: Colorless crystal<br>m.p. (°C) : 114-116<br>IR ($cm^{-1}$) : 3450, 3300, 1670 |
| A-87 | Appearance: Light brown liquid<br>:<br>IR ($cm^{-1}$) : 3450, 3275, 1690 |

As ergosterol biosynthesis-inhibitive type fungicidal compounds among Group B compounds, azole type fungicidal compounds, such as Triadimefon (by ISO (International Organization for Standardization) nomenclature, hereinafter the same), Triadimenol, Triflumizole, Propiconazole, Prochloraz, Pefurazoate, Flusilazole, Ipconazole, Metoconazole and the like are given. N-(3,5-dichlorophenyl)carboximide fungicidal compounds, such as Iprodione, Procymidone and Vinclozolin are given as the carboximide fungicidal compounds. Given as preferable examples of benzimidazole fungicidal compounds are Benomyl, Thiophanate, Thiophanate methyl, Carbendazim, Fuberidazol, Cypendazole, Thiabendazole and the like. Preferable examples of carbamate fungicidal compounds include Diethofencarb and the like.

The fungicidal composition for agriculture and horticulture of the present invention can be prepared by simply blending a group A compound and a group B compound. The fungicidal composition of the present invention also can be prepared by blending a formulation containing a group A compound and a formulation

containing a group B compound. It is, however, desirable to use a formulation of powder, wettable agent, granule, emulsion concentrate or the like, which contains at least one group A compound and at least one group B compound together with formulation adjuvants. The amount of compounds contained in such a preparation is 0.1 to 95% by weight, preferably 0.5 to 90% by weight, and more preferably 2 to 70% by weight, for both the group A compound and the group B compound.

Formulation adjuvants which can be used include carriers, diluents and surfactants. Given as specific examples are solid carriers such as talc, kaolin, bentonite, diatomaceous earth, white carbon and clay; and liquid diluents such as water, xylene, toluene, chlorobenzene, cyclohexane, cyclohexanone, dimethylsulfoxide, dimethylformamide, and alcohol. Various surfactants may be used depending on the effects intended. Examples include emulsifiers such as polyoxyethylene alkylaryl ether and polyoxyethylene sorbitan monolaurate; dispersants such as lignin sulfonate and dibutylnaphthalene sulfonate; and wetting agents such as alkyl sulfonate and alkylphenyl sulfonate.

The above-mentioned formulations include those used as are and those used after diluted with water or the like to a prescribed concentration. When used after dilution, the concentration of the effective components of the present invention is preferably in the range of 0.001 to 1.0% by weight.

The effective components of the present invention can be used in combination with other active ingredients such as, for example, bactericides, insecticides, acaricides and herbicides.

According to the present invention, the combined use of at least one derivative of 1,5-diphenyl-1H-1,2,4-triazole-3-carboxamide represented by formula (I) and at least one fungicidal compound selected from the group consisting of ergosterol biosynthesis-inhibitive type compounds, carboximide compounds, benzimidazole compounds and carbamate compounds exhibits a superior synergistic effect. This synergistic effect ensures reduction in the amount of the drugs to be used and enables the composition of the present invention useful as a fungicide composition for agriculture and horticulture, particularly for combating the gray mold disease.

Other features of the invention will become apparent in the course of the following description of the exemplary embodiments which are given for illustration of the invention and are not intended to be limiting thereof.

## EXAMPLES

In order to make clear the synergistic effect of a group A compound and a group B compound, an expected degree of attack by disease in test examples below was calculated according to the method proposed by R. S. Colbey (Weed, vol. 15, pp 20-22). Specifically, rating a completely attacked case at 100 and completely controlled case at 0 in evaluating the respective degree of attacks X and Y when a group A compound or a group B compound was used individually, the expected degree of attack (E) for the combined use of the group A compound and the group B compound was calculated according to the following equation (1).

$$E = X \cdot Y/100 \qquad (1)$$

The exhibition of the synergistic effect can be evidenced if the degree of attack obtained by the use of the fungicide composition of the present invention, in which the group A compound and the group B compound are mixed, is smaller than the expected degree of attack (E) calculated by the above equation (1).

Tests for controlling effect against gray mold were carried out according to the cucumber fruit method (Nobuo TEZUKA, Akira KISO, J. Pesticide Sci., 1, 321-324 (1976)).

This test method consists of cutting a washed cucumber fruit into 5 cm pieces, dipping the pieces in a drug solution of a prescribed concentration for 10 minutes, then drying in air, placing them on a plate of PSA medium filled with *Botrytis cinerea,* and measuring the attacked height increased in five days. The rate of attack in the treated area was then determined from the attacked height in the treated area for the attacked height of the untreated area as 100.

The characteristics of this method reside in that it is close to the actual field test, it can quickly detect the effect of drugs in a simple manner, and it can quantitatively determine the effects of drugs with ease.

**Formulation Example 1** ⟨Dust⟩

| | parts by weight |
|---|---|
| Group A compound | 3 |
| Group B compound | 3 |
| Clay | 40 |
| Talc | 54 |

The above ingredients were pulverized and mixed to obtain a dust.

**Formulation Example 2** ⟨Wettable Powder⟩

| | parts by weight |
|---|---|
| Group A compound | 25 |
| Group B compound | 25 |
| Lignin sulfonate | 5 |
| Alkyl sulfonate | 3 |
| Diatomaceous earth | 42 |

The above ingredients were pulverized and mixed to obtain wettable powder.

**Formulation Example 3** ⟨Granules⟩

| | parts by weight |
|---|---|
| Group A compound | 5 |
| Group B compound | 5 |
| Bentonite | 38 |
| Clay | 45 |
| Lignin sulfonate | 7 |

The above ingredients were mixed and kneaded with the addition of water. The mixture was extruded and then dried to obtain granules.

**Formulation Example 4** ⟨Emulsion Concentrate⟩

| | parts by weight |
|---|---|
| Group A compound | 20 |
| Group B compound | 20 |
| Polyoxyethylene alkylaryl ether | 10 |
| Polyoxyethylenesorbitan monolaurate | 3 |
| Xylene | 47 |

The above ingredients were mixed and dissolved to obtain an emulsion concentrate.

Test Example 1

⟨Test for controlling effect against cucumber gray mold (*Botrytis cinerea* on cucumber)⟩

A cucumber was washed, cut into 5 cm pieces, dipped in a drug solution made by diluting the emulsion prepared in Formulation Example 4 to a prescribed concentration for 10 minutes, and dried in air. The cucumber pieces were then placed on a plate of PSA medium filled with *Botrytis cinerea*. After five days, the increase in the height of the attacked site was measured. The rate of attack in the treated area was determined taking the height of attack in the untreated area as 100. The results are shown in Table 3.

In order to make the effect of the present invention clear, the values of expected degree of attack (E) calculated by the Colbey's equation (1) are also given in Table 3.

TABLE 3

| Compound No. or Compound name | Concentration (ppm) | Attacked ratio (%) | Expected Attacked ratio E (%) |
|---|---|---|---|
| Untreated | - | 100 | - |
| Compound (A-54) | 25 | 58 | |
| Compound (A-67) | 25 | 74 | |
| Compound (A-53) | 25 | 74 | |
| Ipconazole | 25 | 36 | |
| Metoconazole | 25 | 26 | |
| Flusilazole | 25 | 64 | |
| Iprodione | 25 | 45 | |
| Procymidone | 25 | 90 | |
| Compound (A-54) + Ipconazole | 25+25 | 8 | 21 |
| Compound (A-54) + Metoconazole | 25+25 | 8 | 15 |
| Compound (A-54) + Flusilazole | 25+25 | 20 | 37 |

TABLE 3 (Continued)

| Compound No. or Compound name | Concentration (ppm) | Attacked ratio (%) | Expected Attacked ratio E (%) |
|---|---|---|---|
| Compound (A-54) + Iprodione | 25+25 | 0 | 26 |
| Compound (A-54) + Procymidone | 25+25 | 2 | 52 |
| Compound (A-67) + Ipconazole | 25+25 | 14 | 27 |
| Compound (A-67) + Metoconazole | 25+25 | 7 | 19 |
| Compound (A-67) + Flusilazole | 25+25 | 35 | 48 |
| Compound (A-67) + Iprodione | 25+25 | 3 | 34 |
| Compound (A-67) + Procymidone | 25+25 | 5 | 67 |
| Compound (A-53) + Ipconazole | 25+25 | 7 | 27 |
| Compound (A-53) + Metoconazole | 25+25 | 6 | 19 |
| Compound (A-53) + Flusilazole | 25+25 | 27 | 48 |
| Compound (A-53) + Iprodione | 25+25 | 3 | 34 |
| Compound (A-53) + Procymidone | 25+25 | 6 | 67 |

Obviously, numerous modifications and variations of the present invention are possible in light of the above teachings. It is therefore to be understood that within the scope of the appended claims, the invention may be practiced otherwise than as specifically described herein.

## Claims

**1.** A fungicidal composition for agriculture and horticulture use, which comprises as effective components, at least one derivative of 1,5-diphenyl-1H-1,2,4-triazole-3-carboxamide represented by the following formula (I),

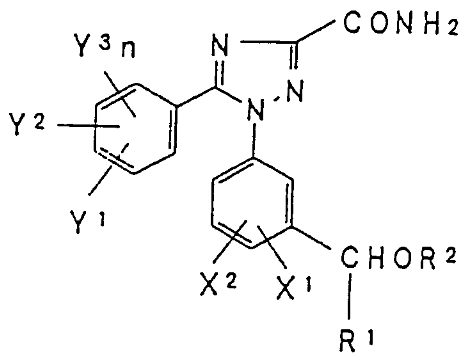 (I)

wherein $R^1$ is a $C_1$-$C_6$ alkyl group, a $C_3$-$C_6$ cycloalkyl group, a $C_1$-$C_5$ fluoroalkyl group, a ($C_1$-$C_4$ alkoxy)methyl group or a phenyl group, $R^2$ is a $C_1$-$C_8$ alkyl group, a ($C_3$-$C_6$ cycloalkyl)methyl group, a $C_2$-$C_5$ fluoroalkyl group, a ($C_1$-$C_4$ alkoxy)($C_1$-$C_4$ alkyl) group, a phenyl group, a phenylmethyl group or a phenylmethyl group substituted by a $C_1$-$C_4$ alkyl group or a halogen atom, $X^1$ represents a hydrogen atom, a $C_1$-$C_4$ alkyl group, a $C_1$-$C_4$ alkoxy group or a halogen atom, $X^2$ represents a hydrogen atom, a $C_1$-$C_4$ alkyl group or a halogen atom, $Y^1$ is a hydrogen atom, a halogen atom, a $C_1$-$C_4$ alkyl group, a $C_1$-$C_4$alkoxy group, a $C_1$-$C_4$ fluoroalkoxy group, a HO group, a HOOC group or a ($C_1$-$C_4$ alkoxy)-carbonyl group, $Y^2$ is a hydrogen atom, a $C_1$-$C_4$ alkyl group or a halogen atom, $Y^3$ is a hydrogen atom or a halogen atom, and n denotes 1 or 2, and

at least one fungicidal compound selected from the group consisting of ergosterol biosynthesis-inhibitive type compounds, carboximide compounds, benzimidazole compounds and carbamate compounds.

2. The fungicidal composition according to Claim 1, wherein said 1,5-diphenyl-1H-1,2,4-triazole-3-carboxamide is 1-[3-(1-n-butoxy-2-methylpropyl)phenyl-5-(substituted or unsubstituted)phenyl-1,2,4-triazole-3-carboxamide.

3. The fungicidal composition according to Claim 1, wherein the ergosterol biosynthesis-inhibitive type fungicidal compound is a compound selected from the group consisting of Triadimefon, Triadimenol, Triflumizole, Propiconazole, Prochloraz, Pefurazoate, Flusilazole, Ipconazole and Metoconazole.

4. The fungicidal composition according to Claim 1, wherein the carboximide fungicidal compound is a N-(3,5-dichlorophenyl)carboximide fungicidal compound.

5. The fungicidal composition according to Claim 4, wherein the N-(3,5-dichlorophenyl)carboximide fungicidal compound is a compound selected from the group consisting of Iprodione, Procymidone and Vinclozolin.

6. The fungicidal composition according to Claim 1, wherein the benzimidazole fungicidal compound is a compound selected from the group consisting of Benomyl, Thiophanate, Thiophanate methyl, Carbendazim, Fuberidazol, Cypendazole and Thiabendazole.

7. The fungicidal composition according to Claim 1, wherein the carbamate fungicidal compound is Diethofencarb.

8. The fungicidal composition according to Claim 1, for use in combating the gray mold disease.

**Patentansprüche**

1. Fungizide Zusammensetzung für landwirtschaftlichen und gartenbaulichen Einsatz, die als Wirkstoffe umfaßt:
   - mindestens ein Derivat von 1,5-Diphenyl-1H-1,2,4-triazole-3-carboxamide der folgenden Formel (I):

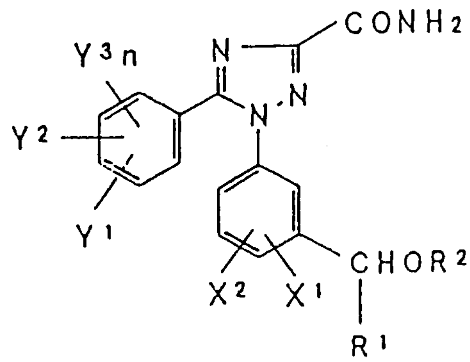

(I)

worin $R^1$ eine $C_{1-6}$-Alkylgruppe, eine $C_{3-6}$-Cycloalkylgruppe, eine $C_{1-5}$-Fluoralkylgruppe, eine ($C_{1-4}$-Alkoxy)-Methylgruppe oder eine Phenylgruppe ist,
$R^2$ eine $C_{1-8}$-Alkylgruppe, eine ($C_{3-6}$-Cycloalkyl)-Methylgruppe, eine $C_{2-5}$-Fluoralkylgruppe, eine ($C_{1-4}$-Alkoxy)($C_{1-4}$-Alkyl)-Gruppe, eine Phenylgruppe, eine Phenylmethylgruppe oder eine Phenylmethylgruppe ist, die durch eine $C_{1-4}$-Alkylgruppe oder ein Halogenatom substituiert ist,
$X^1$ ein Wasserstoffatom, eine $C_{1-4}$-Alkylgruppe, eine $C_{1-4}$-Alkoxygruppe oder ein Halogenatom bedeutet,
$X^2$ ein Wasserstoffatom, ein $C_{1-4}$-Alkylgruppe oder ein Halogenatom bedeutet,
$Y^1$ ein Wasserstoffatom, ein Halogenatom, eine $C_{1-4}$-Alkylgruppe, eine $C_{1-4}$-Alkoxygruppe, eine $C_{1-4}$-Fluoralkoxygruppe, eine HO-Gruppe, eine HOOC-Gruppe oder eine ($C_{1-4}$-Alkoxy)-Carbonylgruppe bedeutet,
$Y^2$ ein Wasserstoffatom, eine $C_{1-4}$-Alkylgruppe oder ein Halogenatom ist,
$Y^3$ ein Wasserstoffatom oder ein Halogenatom ist und
n 1 oder 2 bedeutet, und

- mindestens eine fungizide Verbindung aus der durch Verbindungen vom Ergosterin-Biosynthese-Inhibitor-Typ, Carboximid-Verbindungen, Benzimidazol-Verbindungen und Carbamat-Verbindungen gebildeten Gruppe.

**2.** Fungizide Zusammensetzung nach Anspruch 1, worin 1,5-Diphenyl-1H-1,2,4-triazol-3-carboxamid ein 1-[3-(1-n-Butoxy-2-methylpropyl)]-phenyl-5-(substituiertes oder unsubstituiertes)-phenyl-1,2,4-triazol-3-carboxamid ist.

**3.** Fungizide Zusammensetzung nach Anspruch 1, worin die fungizide Verbindung vom Ergosterin-Biotsynthese-Inhibitor-Typ eine Verbindung aus der durch Triadimefon, Triadimenol, Triflumizol, Propiconazol, Prochloraz, Pefurazoat, Flusilazol, Ipconazol und Metoconazol gebildeten Gruppe ist.

**4.** Fungizide Zusammensetzung nach Anspruch 1, worin die fungizide Carboxamidverbindung eine fungizide N-(3,5-Dichlorphenyl)-carboximidverbindung ist.

**5.** Fungizide Zusammensetzung nach Anspruch 4, worin die fungizide N-(3,5-Dichlorphenyl)-carboximidverbindung eine Verbindung aus der durch Iprodion, Procymidon und Vinclozolin gebildeten Gruppe ist.

**6.** Fungizide Zusammensetzung nach Anspruch 1, worin die fungizide Benzimidazolverbindung eine Verbindung aus der durch Benomyl, Thiphanat, Thiophanatmethyl, Carbendazim, Fuberidazol, Cypendazol und Thiabendazol gebildeten Gruppe ist.

**7.** Fungizide Zusammensetzung nach Anspruch 1, worin die fungizide Carbamatverbindung Diethofencarb ist.

**8.** Fungizide Zusammensetzung nach Anspruch 1 zur Verwendung bei der Bekämpfung von Grauschimmel (gray mold disease).

## Revendications

1. Composition fongicide pour l'agriculture et l'horticulture, qui comprend, comme composants efficaces, au moins un dérivé de 1,5-diphényl-1H-1,2,4-triazole-3-carboxamide représenté par la formule (I) suivante,

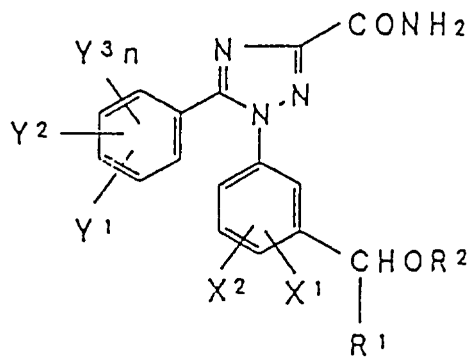

(I)

dans laquelle $R^1$ représente un groupe alkyle en $C_{1-6}$, un groupe cycloalkyle en $C_{3-6}$, un groupe fluoroalkyle en $C_{1-5}$, un groupe (alcoxy en $C_{1-4}$)méthyle ou un groupe phényle, $R^2$ représente un alkyle en $C_{1-8}$, un groupe (cycloalkyle en $C_{3-6}$)méthyle, un groupe fluoroalkyle en $C_{2-5}$, un groupe (alcoxy en $C_{1-4}$) (alkyle en $C_{1-4}$), un groupe phényle, un groupe phénylméthyle ou un groupe phénylméthyle substitué par un groupe alkyle en $C_{1-4}$ ou un atome d'halogène, $X^1$ représente un atome d'hydrogène, un groupe alkyle en $C_{1-4}$, un groupe alcoxy en $C_{1-4}$ ou un atome d'halogène, $X^2$ représente un atome d'hydrogène, un groupe alkyle en $C_{1-4}$ ou un atome d'halogène, $Y^1$ représente un atome d'hydrogène, un atome d'halogène, un groupe alkyle en $C_{1-4}$, un groupe alcoxy en $C_{1-4}$, un groupe fluoroalcoxy en $C_{1-4}$, un groupe OH, un groupe HOOC ou un groupe (alcoxy en $C_{1-4}$)-carbonyle, $Y^2$ représente un atome d'hydrogène, un groupe alkyle en $C_{1-4}$ ou un atome d'halogène, $Y^3$ représente un atome d'hydrogène ou un atome d'halogène, et n vaut 1 ou 2, et
au moins un composé fongicide choisi dans le groupe constitué de composés de type inhibiteur de la biosynthèse de l'ergostérol, de composés de type carboximide, de composés de type benzimidazole et de composés de type carbamate.

2. Composition fongicide selon la revendication 1, dans laquelle ledit 1,5-diphényl-1H-1,2,4-triazole-3-carboxamide est le 1-[3-(1-n-butoxy-2-méthylpropyl)]phényl-5-phényl(substitué ou non substitué)-1,2,4-triazole-3-carboxamide.

3. Composition fongicide selon la revendication 1, dans laquelle le composé fongicide de type inhibiteur de la biosynthèse de l'ergostérol est un composé choisi dans le groupe consituté de Triadiméfon, Triadiménol, Triflumizole, Propiconazole, Prochloraz, Péfurazoate, Fluosilazole, Ipconazole et Métoconazole.

4. Composition fongicide selon la revendication 1, dans laquelle le composé de type carboximide fongicide est un composé fongicide de type N-(3,5-dichlorophényl)carboximide.

5. Composition fongicide selon la revendication 4, dans laquelle le composé fongicide de type N-(3,5-dichlorophényl)carboximide est choisi dans le groupe consitué d'Iprodione, de Procymidone et de Vinclozolin.

6. Composition fongicide selon la revendication 1, dans laquelle le composé fongicide type benzimidazole est un composé choisi dans le groupe constitué de Bénomyl, Thiophanate, Thiophanate méthyle, Carbendazim, Fubéridazol, Cypendazole et Thiabendazole.

7. Composition fongicide selon la revendication 1, dans lequel le composé fongicide de type carbamante est du Diéthofencarb.

8. Composition fongicide selon la revendication 1, destinée à être utilisée pour lutter contre la maladie de la moisissure grise.